# EUROPEAN PATENT APPLICATION

(11) **EP 1 903 816 A1**
(43) Date of publication of application: **26.03.2008**
(21) Application number: 06019891.8
(22) Date of filing: 22.09.2006
(51) Int. Cl.: H04Q 7/38, H04L 12/56

(54) **Method for operating an access node and access node thereof**

(71) Applicant: Nokia Siemens Networks GmbH & Co. KG, 81541 München (DE)
(72) Inventor: Andersen, Frank-Uwe, 10625 Berlin (DE); Breuer, Volker, 16727 Bötzow (DE); Kroth, Norbert, 14482 Potsdam (DE); Ulrich, Thomas, 67098 Bad Dürkheim (DE); Waldhauser, Richard, 81249 München (DE)

(57) **Abstract**

The invention is concerned with an access node (10) in a radio communications system (1000) which has a plurality of access nodes and with a method for operating the access node (10), wherein the access node (10) comprises of: storing means (12) arranged to store a configuration, the configuration comprising of at least a list of neighbouring access nodes, transceiver means (11) arranged to receive information regarding a further access node (10) of said plurality from at least one user equipment (1), the at least one user equipment (1) being served by the at least one access node (10) and updating means (13) arranged to update the configuration using the received information.

## Description

### Field of the invention

The invention is used in radio communications systems to ensure that access nodes maintain up-to-date configurations during their operations.

### Summary of the invention

Existing 2G (2^{nd} Generation Wireless Mobile Communication Technology) and 3G (3^{rd} Generation Wireless Mobile Communication Technology) mobile networks require intensive network planning in order to achieve a high capacity of UEs (User Equipemnts) and user satisfaction based on predetermined traffic models, network topology data and networking scenarios. To optimise the network planning a central RRM (radio resource management) node, such as a network management node is used to control the utilisation of the radio resources available within a radio communications system. Alternatively, the RRM node can be a central RNC (radio network controller) or BSC (base station controller) respectively controlling nodeBs or BTSs (base transceiver stations) within a radio communications system.

In mobile networks beyond 3G such as for example UTRAN-LTE (Universal Mobile Telecommunications System Terrestrial Radio Access Network-Long Term Evolution), it is planned to utilise distributed RRM (dRRM) techniques wherein the utilisation of radio resources is co-ordinated between different nodes, especially between access nodes such as a nodeB and/or a BTS.

However, such co-ordination requires a dynamic exchange of information between nodes as well as a dynamic management of radio resources available. As a result, a large amount of exchange information needs to be transmitted between nodes which in turn reduces the amount of bandwidth available for the transmission of user data, as well as increasing the amount of processing performed required to maintain the configuration of the different nodes up-to-date. As resources available at a node are limited, such techniques hamper the co-ordinated functioning of the nodes and reduce the efficiency of the network.

A need therefore exists for a technique which resolves the above mentioned issues as well as providing for a network planning technique that is efficient, simple to implement and does not require a large amount of dedicated resources.

With the present invention, the above mentioned issues are resolved. The technique is achieved by the teachings contained in the independent claims. Preferred embodiments of the invention are described in the dependent claims.

Said independent method claim operates at least one access node of a plurality of access nodes in a radio communications system, comprising the steps of:
- storing by said at least one access node of a configuration, said configuration comprising of at least a list of neighbouring access nodes;
- receiving by said at least one access node information regarding a further access node of said plurality from at least one user equipment, said at least one user equipment being served by said at least one access node, and
- updating by said at least one access node said configuration using said received information.

Said independent access node claim comprises means arranged for operating said access node of a plurality of access nodes in a radio communications system, comprising of:
- storing means arranged to store a configuration, said configuration comprising of at least a list of neighbouring access nodes;
- transceiver means arranged to receive information regarding a further access node of said plurality from at least one user equipment, said at least one user equipment being served by said at least one access node, and
- updating means arranged to update said configuration using said received information.

The proposed technique allows for access nodes in a radio communications system, to be independent from a central management node and be in the position to maintain a configuration relating to the access node's neighbourhood up-to-date at all times. Furthermore, the amount of information exchanged between nodes is greatly reduced as access nodes use information transmitted from user equipments present. In this manner signalling between access nodes is reduced. As user equipments transmit information, the access nodes receive up-to-date information allowing them to obtain a detailed image of the radio environment of their neighbourhoods and thus maintaining an up-to-date configuration. In this way, an access node can make decisions using current information, thus increasing the efficiency of the network.

Further advantages can be seen in the dependent claims wherein, the information comprises of measurements taken by the at least one user equipment on at least one radio channel between the at least one user equipment and the further access node. The measurements taken can indicate a quality of the at least one radio channel. In this way, the user equipment provides the information and thus provides the access node with indications of the quality of the radio channel thus reducing the monitoring load of the access node. The measurements can comprise of at least one of the following: a pathloss measurement of the radio channel, a signal to noise ratio of the radio channel, an energy per bit to the spectral noise density ratio of the radio channel. The radio channel on which the measurements are taken can be a broadcast channel, as this is the channel that user equipments listen to and thus measurements taken on this channel provide a very good indication of the quality of the radio environment present.

Additionally, the at least one access node can further receive information from a further access node of the plurality, the information comprising of a handover success or failure rate relating to handovers of user equipments between the at least one access node and the at least one further access node and/or at least one time period indicating an amount of time that user equipments were transferred between the at least one access node and the at least one further access node. Thus, permitting the access node to also use information that is not taken from measurements of a radio channel. Also, the at least one access node can further update the configuration using the received information. Furthermore, upon updating the configuration, the at least one access node can add the further access node to the list of neighbouring access nodes. In this way, the access node can maintain an up-to-date list of neighbouring access nodes that can be used for a handover procedure. Additionally in a further refinement, upon updating the configuration with the information, the at least one access node can connect to the further access node using a peer to peer message. In this way, the access nodes can directly communicate with each other and exchange information, as for the connected access nodes the existing radio communications system becomes transparent. Furthermore, upon connecting to the further access node the at least one access node can also register for further information updates from the further access node and/or can establish a radio resource management relationship between the at least one access node and the further access node. The access nodes can also operate as a radio resource management nodes, thus increasing the efficiency of the radio communications system as the radio resources can be better managed.

Additionally in a further refinement of the invention, upon updating the configuration, the at least one access node can also delete the further access node from the list of neighbouring access nodes. In this way, when a further access node is determined as not being useful for a handover it is deleted from the list, allowing an access node to maintain an up-to-date configuration. Thus when a handover is necessary, the configuration will comprise of access nodes that can be used without any further signalling exchange being necessary. Additionally in yet a further refinement of the invention, upon deleting the further access node from the list of neighbouring access nodes, the at least one access node can also de-register for further information updates from the deleted further access node, in order to stop receiving unwanted information. Furthermore, the at least one access node can also request from the at least one user equipment the measurements. In this way, an access node is in the position to also request information if necessary without having to wait for a user equipment to transmit information when the user equipment has gathered that information.

### Short description of the drawings

The present invention will become more apparent from the description given herein below and from the accompanying drawings which are given by way of illustration only, and thus are not limitative of the present invention, and wherein:
- Fig. 1: depicts a view of a radio communications system, wherein the inventive technique is applicable.
- Fig. 2: is a flow chart showing the steps of the invention.
- Fig. 3: depicts an illustrative example of the implementation of the inventive technique.
- Fig. 4: depicts in block diagram form the arrangement of means for executing the inventive technique.

### Detailed description of the invention

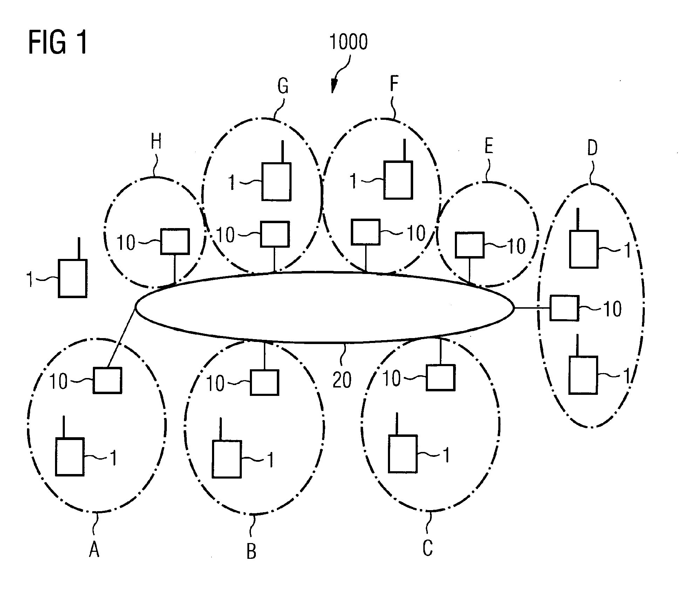

A radio communications system 1000, wherein the inventive technique is applicable is depicted in fig. 1. It comprises of a plurality of access nodes 10 that provide the interface between a plurality of UEs 1 (user equipments) to connect to a fixed network 20 such as the internet and/or the PSTN (Public Switched Telephone Network) and/or to other cellular networks. An access node 10 is arranged to operate as a RRM (Radio Resource Management) node and can be one of the following: a BTS (Base Transceiver Station), a nodeB, a BSC (Base Station Controller), a RNC (Radio Network Controller). A UE 1 can be a mobile station. For reasons of ease of understanding of the invention, MSCs (Mobile Switching Centres), MGWs (Media Gateways), GMSCs (Gateway Mobile Switching Centres), SGSNs (Serving GPRS Support Nodes) and/or GGSNs (Gateway GRPS Support Nodes) that provide an interface between access node 10 and the fixed network are not depicted in fig. 1. However, a person skilled in the art would be aware of the existence of them.

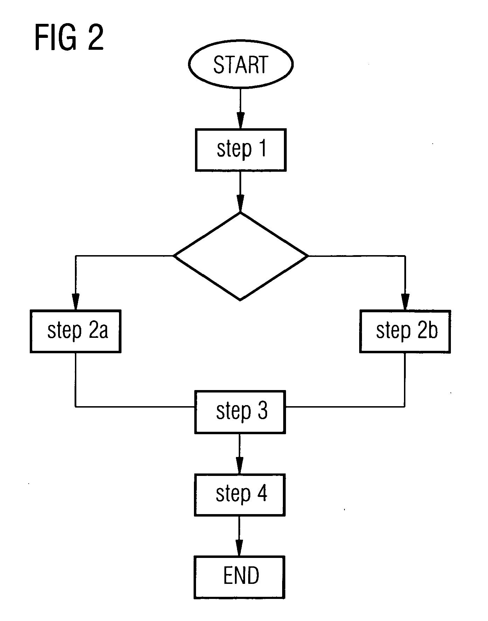

Fig. 2 depicts, in flow chart form, the steps performed by the inventive technique. A configuration which comprises of at least of a list of neighbouring access nodes is stored on access node 10, in step 1. The configuration can be either loaded and stored on access node 10 and read when access node 10 is activated or it can be downloaded from a central network management entity upon request from access node 10 when access node 10 is activated or it can be built up by access node 10 by gathering information from its surrounding neighbouring access nodes 10 upon being activated. Each access node 10 provides radio coverage for a certain area, also known as a cell A, B, C, D, E, F, G, H, and this radio coverage allows UEs 1 located within the cell to be served by access node 10. In this way UL (Uplink) and DL (Downlink) transmissions can be effected. An access node 10 can provide radio coverage to more than one cell at a time, depending on the system architecture implemented within radio communications system 1000. Access node 10 receives information from at least one UE 1 which it is serving regarding a further access node 10 present in step 2a. Once the information has been received, access node 10 uses it to update the configuration that it stores, in step 3.

The information transmitted by UE 1 to its serving access node 10 comprises of measurements taken by UE 1 on at least one radio channel, the radio channel being between UE 1 and the further access node 10. In one embodiment of the inventive technique the radio channel used for the measurements is a broadcast channel. As UEs 1 monitor and when necessary use the broadcast channel it is simple and efficient to take measurements on this channel. In another embodiment of the inventive technique other radio channels are used to take the measurements.

The measurements taken by UE 1 indicate a quality of the radio channel being measured. In one embodiment the UE 1 takes the measurements and processes them and the results of the process are sent as information to the serving access node 10. In another embodiment, the UE 1 takes the measurements and sends them as information to access node 10 which then processes them before updating the configuration.

The measurements taken comprise of at least one of the following: a pathloss measurement of the radio channel, a signal to noise ratio of the radio channel, an energy per bit to the spectral noise density ratio of the radio channel. In one embodiment, UE 1 takes measurements periodically or whenever it receives a transmission over the broadcast channel from a further access node 10. In another embodiment, UE 1 takes measurements upon receiving a command from access node 10 requesting information.

As mentioned hereinabove access node 10 uses the information received to update its stored configuration. In one embodiment, the received information is used to update the part of the configuration relating to the neighbouring list. The received information enables access node 10 to generate a clear picture of the radio environment present around itself and neighbouring access nodes 10 that are part of the neighbouring list. In this way the indications of quality of the radio channel received from UEs 1 enable the access node 10 to determine which neighbouring access node 10 is best suited for a handover operation. It is also possible for more than one neighbouring access nodes 10 to have a radio channel with a high quality indication, enabling access node 10 to have more than one neighbouring access nodes 10 that are suitable for a handover operation.

In a further refinement of the inventive technique, access node 10 can also transmit a message requesting from UE 1 the measurements. This allows access node 10 to be updated its configuration if the access node 10 ascertains for example by means of a timer, that there has been no reception of information from a UE 1.

Additionally, in a further refinement of the inventive technique, access node 10 receives information from a further access node 10 or even from a plurality of them in step 2b. The information received comprises of a handover success or failure rate relating to handovers of UEs 1 between the access node 10 and the further access node 10 and/or at least one time period indicating an amount of time that UEs 1 were transferred between access node 10 and further access node 10. The information transmitted from the further access node 10 to access node 10 is transmitted using peer to peer messaging.

Access node 10 also uses this information received in step 2b, to update its stored configuration, and in particular the received information is used to update the part of the configuration relating to the neighbouring list. In a further refinement of the inventive technique, access node 10 adds the further access node 10 to the list of neighbouring access nodes that is part of the configuration.

In this way, apart from using measurements taken by a UE 1 on a radio channel in order to generate a clear picture of the radio environment present around itself and neighbouring access nodes 10 that are part of the neighbouring list, access node 10 can also use information taken by access nodes 10 that can also enable access node 10 to generate a clear picture of which access nodes 10 have a high quality radio environment. For example, if during a handover of a UE 1 between two access nodes 10, the radio environment is not optimal due to a degradation of the signal between UE 1 and the target access node 10, the UE 1 can be handed back to the original access node 10. This alternation between access nodes can take some time and causes degradation to communications to and from UE 1. Degradations to the signal can be caused by shadowing, bad visibility, interference etc.

By providing information on the handover success or failure rate relating to handovers of UEs 1 between the access node 10 and the further access node 10 and/or at least one time period indicating the amount of time that UEs 1 were transferred between access node 10 and further access node 10, access node can determine using this "a posteriori" information whether it is suitable to have the further access node 10 as a potential target handover access node.

In a further refinement of the inventive technique, once access node 10 determines that the further access node 10 is suitable for a handover operation, either from the information received from UE 1 in step 2a or from the information received from other access nodes 10 in step 2b, and updates its configuration with the information relating to the further access node 10, access node 10 then transmits a peer to peer message requesting a connection establishment between the two nodes in step 4. By using peer to peer messaging access nodes 10 can directly communicate to each other and exchange information.

The connection establishment in step 4, also further includes an authentication procedure and an authorisation procedure in order to establish handover relationships between the two access nodes.

In a further refinement, once the connection has been established, access node 10 registers for further information updates from the further access node 10 and/or establishes a radio resource management relationship between itself and the further access node 10.

The establishment of the radio resource management relationship between the two access nodes permits an inter-cell-RRM relation to be built between them and enables the two access nodes to be synchronised. This synchronisation allows the access nodes that operate as radio resource management nodes, to be able to take decisions about whether there are available radio resources at the target access node when performing a handover operation, whether based on the received quality indications certain frequencies can or can not be used and/or whether the radio environment present between the two access nodes permits a handover to the target access node while maintaining quality of service parameters etc. The inventive technique thus enables access nodes 10 to make real-time handover decisions using up-to-date information without having to request information and thus increasing the amount of signalling in the radio communications system 1000.

The establishment of the of the radio resource management relationship between the two access nodes 10 is established over an interface. This interface can be for example an X2 interface. The X2 interface is described in the 3GPP Technical Specification 33.107 version 6.5.0 release 6, June 2005. The X2 interface uses a MAP (Mobile Application Part) protocol and is designed for exchanging data relating to handover between two access nodes thus reducing the amount of signalling exchanged between the access nodes.

In a further refinement, access node 10 when updating the configuration, if it determines from the information received that the further access node 10 is not suitable for a handover operation it deletes the further access node 10 from its list of neighbouring access nodes. Furthermore, upon deleting the further access node 10 from its list, access node 10 will also de-register from the deleted further access node 10, so that no further information updates will be transmitted from the further access node 10.

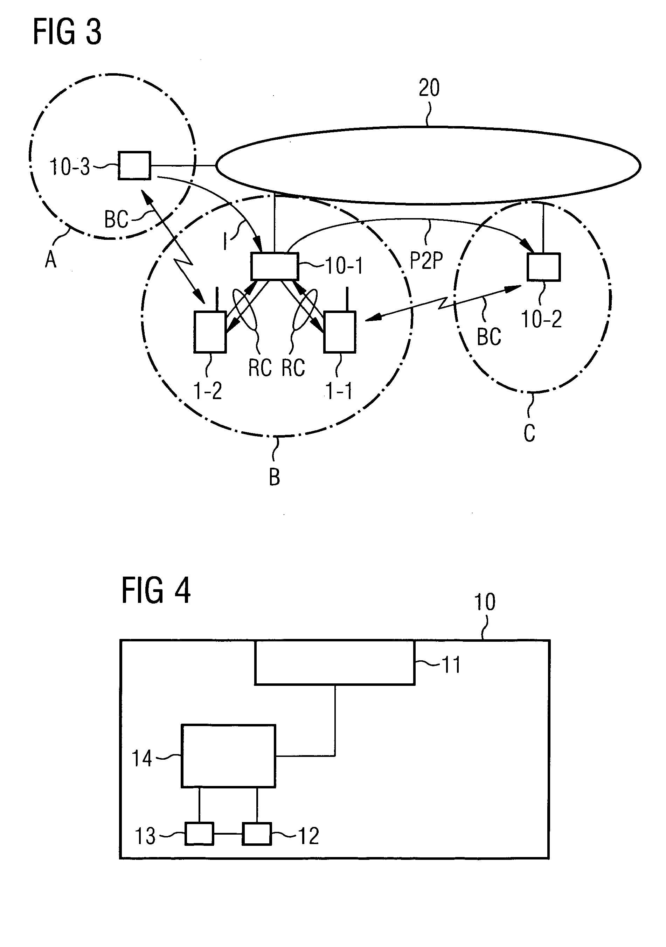

Fig. 3 depicts an illustrative example of the implementation of the inventive technique. Fig. 3 is similar to fig. 1 and depicts only a small part of radio communications system 1000. Three access nodes 10-1, 10-2, 10-3 are shown each one controlling a cell A, B, C. Access node 10-1 is the serving access node for UEs 1-1 and 1-2. Both UEs 1-1, 1-2 communicate with access node 10-1 over radio channels RC. Both UEs 1-1, 1-2 also monitor the broadcast channel BC and take measurements when receiving broadcasts from access nodes 10-2 and 10-3 respectively. The UEs then transmit information comprising the measurements as described hereinabove to access node 10-1. In this example access node 10-1 stores a neighbouring access node list comprising of entries for access nodes 10-2 and 10-3. Access node 10-3 also transmits information I to access node 10-1. After updating its configuration based on the received information, access node 10-1 uses peer to peer messaging P2P via the fixed network to establish a connection, in this example with access node 10-2, for performing handover procedures.

Fig. 4 depicts in block diagram form the arrangement of means for executing the inventive technique comprised within an access node 10.

Access node 10 comprises of storing means 12 that are arranged to store a configuration, the configuration comprising of at least a list of neighbouring access nodes, transceiver means 11 that are arranged to receive information regarding a further access node 10 of the plurality of access nodes in radio communications system 1000 from at least one UE 1, the at least one UE 1 being served by said at least one access node 10 and updating means 13 that are arranged to update said configuration using the received information. Access node 10 also comprises of control means 14 that are arranged to control the access node 10 as well as being further arranged to execute the refinements of the inventive technique.

Furthermore, the inventive technique and the refinements thereof described herein above provide for the following advantages:

The need for manual optimisation and updating of the configuration is reduced. The resilience of the network within a radio communications system is increased as the inventive technique can still work and configurations updated even if access nodes fail and cells controlled by them removed from the stored lists. The inventive technique allows for a dynamic real time updating of the configuration within a radio communications system. Pre-installation of the configuration and network/resource planning within the radio communications system is simplified as the inventive technique is fault tolerant and allows for a configuration to be generated in a very short time period. The UE measurements used, as well as the handover successes permit an access node to provide feedback to neighbouring access nodes as well as becoming aware of the radio environment around it. Having such an awareness, an access node can if necessary be able to request additional resources from neighbouring access nodes. As the information exchanged is done independently from a central network manager a better resource optimisation can be achieved without having to transmit control signalling through a network. Furthermore, the technique allows access nodes to become more independent within the radio communications system and removes the need for a central decision making entity within the system. In the event that a central decision making entity exists in such a system, the technique is also applicable as the processing load on the central decision making entity is reduced and the central decision making entity can focus its resources on other network management functions.

Although the invention has been described in terms of preferred embodiments described herein, those skilled in the art will appreciate other embodiments and modifications which can be made without departing from the scope of the teachings of the invention. All such modifications are intended to be included within the scope of the claims appended hereto.

## Claims

1. Method for operating at least one access node (10) of a plurality of access nodes in a radio communications system (1000), comprising the steps of:
- storing by said at least one access node (10) of a configuration, said configuration comprising of at least a list of neighbouring access nodes;
- receiving by said at least one access node (10) information regarding a further access node (10) of said plurality from at least one user equipment (1), said at least one user equipment (1) being served by said at least one access node (10), and
- updating by said at least one access node (10) said configuration using said received information.

2. Method according to claim 1, wherein said information comprises of measurements taken by said at least one user equipment (1) on at least one radio channel between said at least one user equipment (1) and said further access node (10)

3. Method according to claim 2, wherein said measurements indicate a quality of said at least one radio channel.

4. Method according to claims 2 or 3, wherein said measurements comprise of at least one of the following: a pathloss measurement of said radio channel, a signal to noise ratio of said radio channel, an energy per bit to the spectral noise density ratio of said radio channel.

5. Method according to any one of the previous claims 2 to 4, wherein said radio channel is a broadcast channel.

6. Method according to any one of the previous claims 1 to 5, wherein said at least one access node (10) further receives information from a further access node (10) of said plurality, said information comprising of a handover success or failure rate relating to handovers of user equipments (1) between said at least one access node (10) and said at least one further access node (10) and/or at least one time period indicating an amount of time that user equipments (1) were transferred between said at least one access node (10) and said at least one further access node (10).

7. Method according to claim 6, wherein upon receiving said information, said at least one access node (10) further updates said configuration using said received information.

8. Method according to any one of the previous claims 1 to 7, wherein upon updating said configuration, said at least one access node (10) adds said further access node (10) to said list of neighbouring access nodes.

9. Method according to any one of the previous claims 1 to 8, wherein upon updating said configuration with said information, said at least one access node (10) connects to said further access node (10) using a peer to peer message.

10. Method according to claim 9, wherein upon connecting to said further access node (10) said at least one access node (10) registers for further information updates from said further access node (10) and/or establishes a radio resource management relationship between said at least one access node (10) and said further access node (10).

11. Method according to any one of the previous claims 1 to 7, wherein upon updating said configuration, said at least one access node (10) deletes said further access node (10) from said list of neighbouring access nodes.

12. Method according to claim 11, wherein upon deleting said further access node (10) from said list of neighbouring access nodes, said at least one access node (10) de-registers for further information updates from said deleted further access node (10).

13. Method according to any one of the previous claims 1 to 12, wherein said at least one access node (10) requests from said at least one user equipment (1) said measurements.

14. Access node (10) of a plurality of access nodes in a radio communications system (1000) comprising means arranged for operating said access node (10), comprising of:
- storing means (12) arranged to store a configuration, said configuration comprising of at least a list of neighbouring access nodes;
- transceiver means (11) arranged to receive information regarding a further access node (10) of said plurality from at least one user equipment (1), said at least one user equipment (1) being served by said at least one access node (10), and
- updating means (13) arranged to update said configuration using said received information.

15. Access node (10) according claim 14, wherein said access node (10) is further arranged to operate as a radio resource management node.

16. Radio communications system (1000) comprising at least one access node (10) according to claims 14 to 15.
